# EUROPÄISCHE PATENTSCHRIFT

(11) **EP 2 305 691 B1**
(45) Veröffentlichungstag und Bekanntmachung des Hinweises auf die Patenterteilung: **30.05.2012**
(21) Anmeldenummer: 10009877.1
(22) Anmeldetag: 18.09.2010
(51) Int. Cl.: C07F 7/18, C08G 18/28, C08G 18/78, C08G 18/80, C08G 18/08, C08G 18/32, C08G 18/38, C09D 175/02

(54) **Hochfunktionelle Allophanat- und Silangruppen enthaltende Polyisocyanate**
Highly functional polyisocyanates containing allophanate and silane groups
Polyisocyanates hautement fonctionnels contenant des groupes d'allophanates et de silanes

(30) Priorität: 01.10.2009 DE 102009047964
(43) Veröffentlichungstag der Anmeldung: 06.04.2011
(73) Patentinhaber: Bayer MaterialScience AG, 51368 Leverkusen (DE)
(72) Erfinder: Laas, Hans-Josef, Dr., 51519 Odenthal (DE); Bäker, Thomas, 50859 Köln (DE); Mechtel, Markus, Dr., 51467 Bergisch Gladbach (DE)

(56) Entgegenhaltungen:
- EP-A2- 2 014 692
- WO-A1-2005/090500

## Beschreibung

Die Erfindung betrifft hochfunktionelle Allophanat- und Silangruppen enthaltende Polyisocyanate, ein Verfahren zur ihrer Herstellung und ihre Verwendung als Ausgangskomponente bei der Herstellung von Polyurethan-Kunststoffen, insbesondere als Vernetzerkomponente in Polyurethanlacken und -beschichtungen.

Alkoxysilangruppen enthaltende Polyisocyanatgemische sind seit längerer Zeit bekannt. Derartige Produkte, die neben der Isocyanatgruppe eine zweite reaktive, d. h. zur Vernetzung fähige Struktur enthalten, wurden in der Vergangenheit in unterschiedlichen Polyurethansystemen und -anwendungen zur Erzielung spezieller Eigenschaften, beispielsweise zur Verbesserung der Haftung, Chemikalien- oder Kratzbeständigkeit von Beschichtungen, eingesetzt.

Beispielsweise beschreibt die WO 03/054049 isocyanatfunktionelle Silane, hergestellt aus monomerenarmen aliphatischen oder cycloaliphatischen Polyisocyanaten und sekundären Aminopropyltrimethoxysilanen, als Haftvermittler für Polyurethan-Schmelzklebstoffe.

Nach der Lehre der JP-A 2005015644 läßt sich durch Einsatz von mit N-substituierten, d. h. sekundären Aminopropylalkoxysilanen modifizierten Polyisocyanaten oder Isocyanatprepolymeren die Haftung von Kleb- und Dichtstoffen verbessern.

Die EP-B 0 994 139 beansprucht Umsetzungsprodukte von aliphatischen bzw. cycloaliphatischen Polyisocyanaten mit unterschüssigen Mengen alkoxysilanfunktioneller Asparaginsäureester, wie sie in der EP-A 0 596 360 als Reaktionspartner für isocyanatfunktionelle Verbindungen beschrieben werden, und gegebenenfalls Polyethylenoxidpolyetheralkoholen als Bindemittel für einkomponentige feuchtigkeitsvernetzende Beschichtungen, Kleb- oder Dichtstoffe mit beschleunigter Aushärtung.

Umsetzungsprodukte aliphatischer bzw. cycloaliphatischer Polyisocyanate mit unterschüssigen Mengen alkoxysilanfunktioneller Asparaginsäureester oder sekundärer Aminoalkylsilane werden auch in der WO 02/058569 als Vernetzerkomponenten für Zweikomponenten-Polyurethan-Haftprimer beschrieben.

Die EP-B 0 872 499 beschreibt wässrige zweikomponentige Polyurethanlacke, die als Vernetzerkomponente Isocyanat- und Alkoxysilylgruppen aufweisende Verbindungen enthalten. Der Einsatz dieser speziellen Polyisocyanate führt zu Beschichtungen mit verbesserter Wasserfestigkeit bei gleichzeitig hohem Glanz.

Hydrophil modifizierte und daher leichter emulgierbare, Alkoxysilangruppen enthaltende Polyisocyanate wurden ebenfalls bereits als Vernetzerkomponenten für wässrige 2K-Lack- und Klebstoffdispersionen genannt (z. B. EP-A 0 949 284).

Zur Verbesserung der Kratzbeständigkeit von lösemittelhaltigen wärmehärtenden 2K-PUR-Automobil-Klar- bzw. Decklacken wurden in jüngster Zeit Umsetzungsprodukte von aliphatischen und/oder cycloaliphatischen Polyisocyanaten mit N,N-Bis-(tri-alkoxysilylpropyl)-aminen als Vernetzerkomponente vorgeschlagen (EP-A 1 273 640).

All diesen Silangruppen enthaltenden Polyisocyanatgemischen gemeinsam ist, dass sie durch anteilige Umsetzung von unmodifizierten Polyisocyanaten oder Polyisocyanatprepolymeren mit gegenüber Isocyanatgruppen reaktive Gruppen enthaltenden organofunktionellen Silanen, beispielsweise mercaptofunktionellen Silanen, primären Aminoalkylsilanen, sekundären N-alkylsubstituierten Aminoalkylsilanen oder alkoxysilanfunktionellen Asparaginsäureestern hergestellt werden.

Eine solche Modifizierung führt jedoch zwangsläufig zu einer Erniedrigung der mittleren Isocyanatfunktionalität bezogen auf die der eingesetzten Ausgangspolyisocyanate, was sich um so stärker auswirkt, je höher der angestrebte Silan-Gehalt im Reaktionsprodukt ist. In der Praxis sind in den obengenannten Anwendungen, wie z. B. Lacken oder Klebstoffen, zur Erzielung einer hohen Netzwerkdichte aber gerade Polyisocyanatvernetzer mit möglichst hoher Isocyanatfunktionalität erwünscht.

Darüberhinaus nimmt mit steigendem Modifizierungsgrad auch die Viskosität der Produkte aufgrund der ins Molekül eingebrachten Thiourethan- und insbesondere Harnstoffgruppen drastisch zu, weshalb sich diese Silangruppen enthaltenden Polyisocyanate in der Regel nur unter Verwendung erheblicher Mengen organischer Lösemittel in gelöster Form einsetzen lassen.

Die geschilderten Nachteile Silan-modifizierter Polyisocyanate bezüglich niedriger NCO-Funktionalitäten und hoher Viskositäten lassen sich allerdings sehr elegant durch das Verfahren der EP-A 2 014 692 umgehen. Nach diesem Verfahren werden Silangruppen enthaltende Hydroxyurethane bzw. Hydroxyamide, die aus Aminoalkylsilanen mit cyclischen Carbonaten oder Lactonen unter Ringöffnung zugänglich sind, mit überschüssigen Mengen monomerer Diisocyanate zu lagerstabilen, farbhellen Allophanatpolyisocyanaten umgesetzt, die sich selbst bei hohen Silangehalten durch hohe Isocyanatfunktionalitäten und gleichzeitig niedrige Viskositäten auszeichnen.

Die Silangruppen enthaltenden Allophanatpolyisocyanate der EP-A 2 014 692 eignen sich als Vernetzerkomponenten für eine Vielzahl unterschiedlicher hydroxy- und/oder aminofunktioneller Bindemittel zur Formulierung lösemittelhaltiger, lösemittelfreier oder wässriger Polyurethan- bzw. Polyharnstoffsysteme.

Eine besonders interessante Anwendung für Silan-modifizierte Polyisocyanate stellen festkörperreiche 2K-Beschichtungssysteme auf Basis von Polyasparaginsäureestern dar, wie sie in der eigenen nicht vorveröffentlichten Patentanmeldung mit der Anmeldenummer 102009016173.2 beschrieben sind. Insbesondere unter Verwendung der Allophanatpolyisocyanate gemäß EP-A 2 014 692 hergestellte Polyaspartat-Lacke zeigen eine ausgezeichnete Direkthaftung auf üblicherweise nur schwierig zu beschichtenden metallischen Substraten, wie z. B. Zink, Aluminium oder kaltgewalztem Stahl, wodurch es möglich wird, auf eine Grundierungsschicht zu verzichten.

Obwohl die nach dem Verfahren der EP-A 2 014 692 erhältlichen Silan-modifizierten Allophanatpolyisocyanate bereits vergleichsweise hohe Isocyanatfunktionalitäten aufweisen, reichen diese in Kombination mit den heute verfügbaren, lediglich difunktionellen Polyasparaginsäureestern allerdings häufig nicht aus, um eine für die Praxis ausreichend schnelle Antrocknung der Beschichtungen zu gewährleisten. Die Möglichkeit des Verzichts auf eine Grundierungsschicht bedeutet aber erst in Verbindung mit entsprechend kurzen Trocknungszeiten für den Anwender solcher Beschichtungsmittel eine wirkliche Reduzierung der Lackierzeiten und somit eine Steigerung der Produktivität.

Aufgabe der vorliegenden Erfindung war es daher, neue, Silangruppen enthaltende Polyisocyanate zur Verfügung zu stellen, die zu einer deutlich schnelleren Antrocknung auch in Kombination mit ausschließlich difunktionellen Lackbindemittein führen und dabei gleichzeitig die ausgezeichneten Haftungseigenschaften der Silan-modifizierten Allophanatpolyisocyanate des Standes der Technik zeigen.

Diese Aufgabe konnte mit der Bereitstellung der nachfolgend näher beschriebenen erfindungsgemäß modifizierten Polyisocyanate bzw. des Verfahrens zu ihrer Herstellung gelöst werden.

Die vorliegende Erfindung basiert auf der überraschenden Beobachtung, dass sich Silangruppen enthaltende Hydroxyurethane bzw. Hydroxyamide, die durch Umsetzung von Aminoalkylsilanen mit cyclischen Carbonaten oder Lactonen unter Ringöffnung zugänglich sind, unter Mitverwendung definierter Mengen weiterer Diole und/oder Polyole mit überschüssigen Mengen monomerer Diisocyanate zu hochfunktionellen Allophanatpolyisocyanaten umsetzen lassen, die auch bei hohen Silangehalten niedrige Viskositäten aufweisen und im Vergleich zu den bekannten Silan-modifizierten Allophanatpolyisocyanaten bei gleich guter Metallhaftung zu einer deutlichen Verkürzung der Trockenzeiten führen.

Gegenstand der vorliegenden Erfindung ist ein Verfahren zur Herstellung Allophanatgruppen enthaltender Polyisocyanate durch Umsetzung
A) mindestens eines - aus der Reaktion von Aminosilanen mit cyclischen Carbonaten und/oder Lactonen erhältlichen - Silangruppen aufweisenden Hydroxyurethans und/oder Hydroxyamids
   und
B) mindestens einer weiteren mehrwertigen hydroxyfunktionellen Komponente des Molekulargewichtsbereiches 62 bis 2000 g/mol
   mit einer bezogen auf die NCO-reaktiven Gruppen der Komponenten A) und B) molar überschüssigen Menge an
C) mindestens einem Diisocyanat mit aliphatisch, cycloaliphatisch, araliphatisch und/oder aromatisch gebundenen Isocyanatgruppen
   und gegebenenfalls nachfolgender Entfernung des nicht umgesetzten Diisocyanatüberschusses.

Gegenstand der Erfindung sind auch die nach diesem Verfahren erhältlichen Allophanat- und Silangruppen enthaltenden Polyisocyanate, sowie deren Verwendung als Ausgangskomponenten bei der Herstellung von Polyurethankunststoffen, insbesondere als Vernetzerkomponente in Polyurethanlacken und -beschichtungen.

Ausgangsverbindungen A) für das erfindungsgemäße Verfahren sind beliebige Reaktionsprodukte von Aminosilanen mit cyclischen Carbonaten und/oder Lactonen.

Geeignete Aminosilane zur Herstellung der Ausgangsverbindungen A) sind beispielsweise solche der allgemeinen Formel (I) 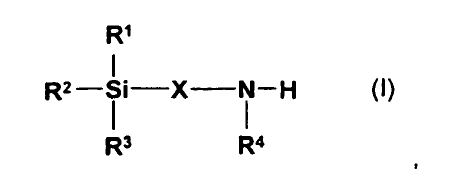 in welcher
- R¹, R² und R³: für gleiche oder verschiedene Reste stehen und jeweils einen gesät- tigten oder ungesättigten, linearen oder verzweigten, aliphatischen oder cycloaliphatischen oder einen gegebenenfalls substituierten aromatischen oder araliphatischen Rest mit bis zu 18 Kohlenstoffato- men bedeuten, der gegebenenfalls bis zu 3 Heteroatome aus der Reihe Sauerstoff, Schwefel, Stickstoff enthalten kann,
- X: für einen linearen oder verzweigten organischen Rest mit mindestens 2 Kohlenstoffatomen steht, der gegebenenfalls bis zu 2 Iminogruppen (- NH-) enthalten kann,
und
- R⁴: für Wasserstoff, einen gesättigten oder ungesättigten, linearen oder verzweigten, aliphatischen oder cycloaliphatischen oder einen gegebenenfalls substituierten aromatischen oder araliphatischen Rest mit bis zu 18 Kohlenstoffatomen oder einen Rest der Formel 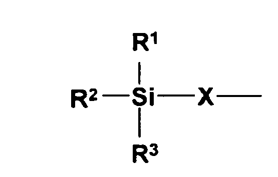 steht, in welchem R¹, R², R³ und X die vorstehend angegebene Bedeutung haben.

Geeignete Aminosilane sind beispielsweise 3-Aminopropyltrimethoxysilan, 3-Aminopropyltriethoxysilan, 3-Aminopropylmethyldimethoxysilan, 3-Aminopropylmethyldiethoxysilan, 3-Aminopropylethyldiethoxysilan, 3-Aminopropyldimethylethoxysilan, 3-Aminopropyldiisopropylethoxysilan, 3-Aminopropyltripropoxysilan, 3-Aminopropyltributoxysilan, 3-Aminopropylphenyldiethoxysilan, 3-Aminopropylphenyldimethoxysilan, 3-Aminopropyltris(methoxyethoxyethoxy)silan, 2-Aminoisopropyltrimethoxysilan, 4-Aminobutyltrimethoxysilan, 4-Aminobutyltriethoxysilan, 4-Aminobutylmethyl-dimethoxysilan, 4-Aminobutylmethyldiethoxysilan, 4-Aminobutylethyldimethoxysilan, 4-Aminobutylethyldiethoxysilan, 4-Aminobutyldimethylmethoxysilan, 4-Aminobutylphenyldimethoxysilan, 4-Aminobutylphenyldiethoxysilan, 4-Amino(3-methylbutyl)methyldimethoxysilan, 4-Amino(3-methylbutyl)methyldiethoxysilan, 4-Amino(3-methylbutyl)trimethoxysilan, 3-Aminopropylphenylmethyl-n-propoxysilan, 3-Aminopropylmethyldibutoxysilan, 3-Aminopropyldiethylmethylsilan, 3-Aminopropylmethylbis(trimethylsiloxy)silan, 11-Aminoundecyltrimethoxysilan, N-Methyl-3-aminopropyltriethoxysilan, N-(n-Butyl)-3-aminopropyltrimethoxysilan, N-(2-Aminoethyl)-3-aminopropyltrimethoxysilan, N-(2-Aminoethyl)-3-aminoisobutylmethyldimethoxysilan, N-(2-Aminoethyl)-3-aminopropylmethyldimethoxysilan, N-(2-Aminoethyl)-3-aminopropyltris(2-ethylhexoxy)silan, N-(6-Aminohexyl)-3-aminopropyltrimethoxysilan, N-Benzyl-N-(2-aminoethyl)-3-aminopropyltrimethoxysilan, Bis(3-trimethoxysilylpropyl)amin, Bis(3-triethoxysilylpropyl)amin, (Aminoethylaminomethyl)-phenethyltrimethoxysilan, N-Vinylbenzyl-N-(2-aminoethyl)-3-aminopropylpolysiloxan, N-Vinylbenzyl-N(2-aminoethyl)-3-aminopro-pylpolysiloxan, 3-Ureidopropyltriethoxysilan, 3-(m-Aminophenoxy)-propyltrimethoxysilan, m- und/oder p-Aminophenyltrimetoxysilan, 3-(3-Aminopropoxy)-3,3-dimethyl-1-propenyltrimethoxysilan, 3-Aminopropylmethylbis(trimethylsiloxy)-silan, 3-Aminopropyltris(trimethylsiloxy)-silan, 3-Aminopropylpentamethyldisiloxan oder beliebige Gemisch solcher Aminosilane.

Bevorzugte Aminosilane zur Herstellung der Ausgangskomponente A) sind solche der allgemeinen Formel (I), in welcher
- R¹, R² und R³: für gleiche oder verschiedene Reste stehen und jeweils einen gesät- tigten, linearen oder verzweigten, aliphatischen oder cycloaliphatischen Rest mit bis zu 6 Kohlenstoffatomen bedeuten, der gegebenenfalls bis zu 3 Sauerstoffatome enthalten kann,
- X: für einen linearen oder verzweigten Alkylenrest mit 2 bis 10 Kohlen- stoffatomen steht, der gegebenenfalls bis zu 2 Iminogruppen (-NH-) ent- halten kann,
und
- R⁴: für Wasserstoff, einen gesättigten, linearen oder verzweigten, aliphatischen oder cycloaliphatischen Rest mit bis zu 6 Kohlen- stoffatomen oder einen Rest der Formel 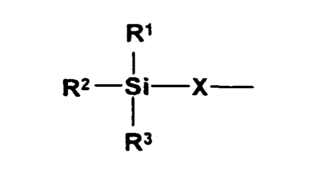 steht, in welchem R¹, R², R³ und X die vorstehend angegebene Bedeutung haben.

Mehr bevorzugte Aminosilane zur Herstellung der Ausgangskomponente A) sind solche der allgemeinen Formel (I), in welcher
- R¹, R² und R³: jeweils Alkylreste mit bis zu 6 Kohlenstoffatomen und/oder Alkoxyreste, die bis zu 3 Sauerstoffatome enthalten, bedeuten, mit der Maßgabe, daß mindestens einer der Reste R¹, R² und R³ für einen solchen Alkoxyrest steht,
- X: für einen linearen oder verzweigten Alkylenrest mit 3 oder 4 Kohlen- stoffatomen steht, und
- R⁴: für Wasserstoff, einen Methylrest oder einen Rest der Formel 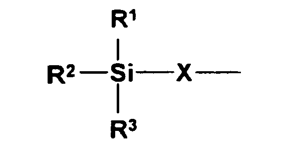 steht, in welchem R¹, R², R³ und X die vorstehend angegebene Bedeutung haben.

Besonders bevorzugte Aminosilane zur Herstellung der Ausgangskomponente A) sind solche der allgemeinen Formel (I), in welcher
- R¹, R² und R³: jeweils Methyl, Methoxy und/oder Ethoxy bedeuten, mit der Maßgabe, daß mindestens einer der Reste R¹, R² und R³ für einen Methoxy- oder Ethoxyrest steht,
- X: für einen Propylenrest (-CH₂-CH₂-CH₂-) steht, und
- R⁴: für Wasserstoff, einen Methylrest oder einen Rest der Formel 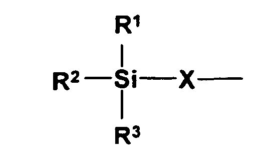 steht, in welchem R¹, R², R³ und X die vorstehend angegebene Bedeutung haben.

Ganz besonders bevorzugte Aminosilane sind Aminopropyltrimethoxysilan, 3-Aminopropyltriethoxysilan, 3-Aminopropylmethyldimethoxysilan und/oder 3-Aminopropylmethyldiethoxysilan.

Bei der Herstellung der Ausgangsverbindungen A) für das erfindungsgemäße Verfahren werden die genannten Aminosilane mit beliebigen cyclischen Carbonaten und/oder Lactonen unter Ringöffnung umgesetzt.

Geeignete cyclische Carbonate sind insbesondere solche mit 3 oder 4 Kohlenstoffatomen im Ring, die gegebenenfalls auch substituiert sein können, wie z. B. 1,3-Dioxolan-2-on (Ethylencarbonat, EC), 4-Chlor-1,3-dioxolan-2-on, 4,5-Dichlor-1,3-dioxolan-2-on, 4-Methyl-1,3-dioxolan-2-on (Propylencarbonat, PC), 4-Ethyl-1,3-dioxolan-2-on, 4,5-Dimethyl-1,3-dioxolan-2-on, 4,4-Dimethyl-1,3-dioxolan-2-on, 4-Hydroxymethyl-1,3-dioxolan-2-on (Glycerincarbonat), 4-Phenoxymethyl-1,3-dioxolan-2-on, 1,3-Dioxan-2-on (Trimethylencarbonat), 5,5-Dimethyl-1,3-dioxan-2-on, 5-Methyl-5-propyl-1,3-dioxan-2-on, 5-Ethyl-5-(hydroxymethyl)-1,3-dioxan-2-on (TMP-Carbonat), 4-Isopropyl-5,5-dimethyl-1,3-dioxan-2-on (2,2,4-Trimethyl-pentan-1,3-diolcarbonat), 4-tert-Butyl-5-methyl-1,3-dioxan-2-on (2,4,4-Trimethyl-pentan-1,3-diolcarbonat), 2,4-Dioxaspiro[5.5]un-decan-3-on (Cyclohexan-1,1-dimethanolspirocarbonat) oder beliebige Gemische solcher cyclischen Carbonate. Bevorzugte cyclische Carbonate sind Ethylencarbonat und/oder Propylencarbonat.

Geeignete Lactone sind beispielsweise solche mit 3 bis 6 Kohlenstoffatomen im Ring, die gegebenenfalls auch substituiert sein können, wie z. B. β-Propiolacton, β-Butyrolacton, γ-Butyrolacton, α-Methyl-y-Butyrolacton, γ-Valerolacton, γ-Phenyl-γ-butyrolacton, α,α-Diphenyl-γ-butyrolacton, γ-Hexalacton (γ-Caprolacton), γ-Heptalacton, γ-Octalacton, γ-Nonalacton, γ-Decalacton, γ-Undecalacton, γ-Dodecalacton, γ-Methyl-y-decanolacton, α-Acetyl-γ-butyrolacton, δ-Valerolacton, δ-Hexanolacton, δ-Octanolacton, δ-Nonanolacton, δ-Decalacton, δ-Undecalacton, δ-Tridecalacton, δ-Tetradecalacton, γ-Ethyl-γ-butyl-δvalerolacton, Octahydrocoumarin, ε-Capro-lacton, γ-Phenyl-ε-Caprolacton, ε-Decalacton oder beliebige Gemische solcher Lactone. Bevorzugte Lactone sind β-Propiolacton, γ-Butyrolacton, γ-Valerolacton, γ-Caprolacton und/oder ε-Caprolacton.

Die Herstellung der Ausgangsverbindungen A) durch Umsetzung der genannten Aminosilane mit den cyclischen Carbonaten oder Lactonen ist an sich bekannt und kann beispielsweise nach den in SU 295764, US 4 104 296, EP-B 0 833 830 oder WO 98/18844 beschriebenen Verfahren erfolgen. Im allgemeinen werden dabei die Reaktionspartner bei Temperaturen von 15 bis 100°C, vorzugsweise 20 bis 60°C in äquimolaren Mengen miteinander zur Reaktion gebracht. Es ist aber auch möglich, dass eine der Komponenten, beispielsweise das Aminosilan oder das cyclische Carbonat bzw. Lacton, in einer molar überschüssigen Menge eingesetzt wird, vorzugsweise jedoch in einem Überschuss von maximal 10 mol-%, besonders bevorzugt von maximal 5 mol-%. Die so erhältlichen hydroxyfunktionellen Ausgangsverbindungen A), die bei Einsatz von cyclischen Carbonaten Urethangruppen, bei Einsatz von Lactonen Amidgruppen enthalten, stellen in der Regel farblose niedrigviskose Flüssigkeiten dar.

Neben den Hydroxyurethanen bzw. Hydroxyamiden A) kommt beim erfindungsgemäßen Verfahren mindestens eine weitere mehrwertige hydroxyfunktionelle Komponente B) des Molekulargewichtsbereiches 62 bis 2000 g/mol zum Einsatz.

Hierbei handelt es sich beispielsweise um einfache mehrwertige Alkohole mit 2 bis 14, vorzugsweise 2 bis 6 Kohlenstoffatomen, wie z. B. 1,2-Ethandiol, 1,2- und 1,3-Propandiol, die isomeren Butandiole, Pentandiole, Hexandiole, Heptandiole und Octandiole, 1,10-Decandiol, 1,2- und 1,4-Cyclohexandiol, 1,4-Cyclohexandimethanol, 4,4'-(1-Methylethyliden)-biscyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol, Bis-(2-hydroxyethyl)-hydrochinon, 1,2,4- und 1,3,5-Trihydroxycyclohexan oder 1,3,5-Tris(2-hydroxyethyl)-isocyanurat aber auch um einfache Ester- oder Etheralkohole, wie z. B. Hydroxypivalinsäureneopentylglykolester, Diethylenglykol oder Dipropylenglykol.

Geeignete hydroxyfunktionelle Komponenten B) sind auch die an sich bekannten höhermolekularen Polyhydroxylverbindungen vom Polyester-, Polycarbonat-, Polyestercarbonat- oder Polyethertyp, insbesondere solche des Molekulargewichtsbereiches 200 bis 2000 g/mol.

Als hydroxyfunktionelle Komponenten B) geeignete Polyesterpolyole sind beispielsweise solche eines mittleren, aus Funktionalität und Hydroxylzahl berechenbaren Molekulargewichtes von 200 bis 2000 g/mol, vorzugsweise von 250 bis 1500 g/mol, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen, beispielsweise den obengenannten mit 2 bis 14 Kohlenstoffatomen, mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Die zur Herstellung der Polyesterpolyole verwendeten Säuren oder Säurederivate können aliphatischer, cycloaliphatischer und/oder aromatischer Natur sein und gegebenenfalls, z. B. durch Halogenatome, substituiert und/oder ungesättigt sein. Beispiele geeigneter Säuren sind beispielsweise mehrwertige Carbonsäuren des Molekulargewichtsbereichs 118 bis 300 g/mol oder deren Derivate wie beispielsweise Bernsteinsäure, Adipinsäure, Sebacinsäure, Phthalsäure, Isophthalsäure, Trimellithsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Polyesterpolyole können auch beliebige Gemische dieser beispielhaft genannten Ausgangsverbindungen eingesetzt werden.

Eine als hydroxyfunktionelle Komponente B) bevorzugt einzusetzende Art von Polyesterpolyolen sind solche, wie sie sich in an sich bekannter Weise aus Lactonen und einfachen mehrwertigen Alkoholen, wie z. B. den oben beispielhaft genannten, als Startermolekülen unter Ringöffnung herstellen lassen. Geeignete Lactone zur Herstellung dieser Polyesterpolyole sind beispielsweise ß-Propiolacton, γ-Butyrolacton, γ- und δ-Valerolacton, ε-Caprolacton, 3,5,5- und 3,3,5-Trimethylcaprolacton oder beliebige Gemische solcher Lactone.

Als hydroxyfunktionelle Komponenten B) geeignete Polyhydroxylverbindungen vom Polycarbonattyp stellen insbesondere die an sich bekannten Polycarbonatdiole dar, wie sie sich beispielsweise durch Umsetzung von zweiwertigen Alkoholen, beispielsweise solchen, wie sie oben in der Liste der mehrwertigen Alkohole des Molekulargewichtsbereichs 62 bis 400 g/mol beispielhaft genannt sind, mit Diarylcarbonaten, wie z. B. Diphenylcarbonat, Dialkylcarbonaten, wie z. B. Dimethylcarbonat, oder Phosgen herstellen lassen.

Als hydroxyfunktionelle Komponenten B) geeignete Polyhydroxylverbindungen vom Polyestercarbonattyp sind insbesondere die an sich bekannten Estergruppen- und Carbonatgruppen aufweisende Diole, wie sie beispielsweise gemäß der Lehre der DE-A 1 770 245 oder WO 03/002630 durch Umsetzung zweiwertiger Alkohole mit Lactonen der oben beispielhaft genannten Art, insbesondere ε-Caprolacton und anschließende Reaktion der dabei entstehenden Polyesterdiole mit Diphenylcarbonat oder Dimethylcarbonat erhalten werden können.

Als hydroxyfunktionelle Komponenten B) geeignete Polyetherpolyole sind insbesondere solche eines mittleren, aus Funktionalität und Hydroxylzahl berechenbaren Molekulargewichtes von 200 bis 2000 g/mol, vorzugsweise 250 bis 1500 g/mol, mit einem Hydroxylgruppen-Gehalt von 1,7 bis 25 Gew.-%, vorzugsweise 2,2 bis 20 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, wie die oben beschriebenen einfachen mehrwertigen Alkohole mit 2 bis 14 Kohlenstoffatomen, als Startermoleküle eingesetzt werden. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polyetherpolyole sind auch die an sich bekannten Polyoxytetramethylenglykole, wie sie beispielsweise gemäß Angew. Chem. 72, 927 (1960) durch Polymerisation von Tetrahydrofuran erhalten werden können.

Bevorzugte hydroxyfunktionelle Komponenten B) für das erfindungsgemäßen Verfahren sind die obengenannten einfachen mehrwertigen Alkohole des Molekulargewichtsbereiches 62 bis 400 g/mol und/oder Ester- und/oder Etheralkohole des Molekulargewichtsbereiches 106 bis 400 g/mol.

Besonders bevorzugt sind dabei die oben innerhalb der Liste der einfachen mehrwertigen Alkohole genannten Diole und/oder Triole mit 2 bis 6 Kohlenstoffatomen.

Ganz besonders bevorzugte hydroxyfunktionelle Komponenten B) sind 1,2-Ethandiol, 1,2-Propandiol, 1,3-Propandiol, 1,3-Butandiol, 1,4-Butandiol, 1,6-Hexandiol, und/oder 1,1,1-Trimethylolpropan.

Die hydroxyfunktionellen Komponenten B) kommen beim erfindungsgemäßen Verfahren in Summe in einer Menge von 1 bis 70 Gew.-%, vorzugsweise von 2 bis 35 Gew.-%, besonders bevorzugt von 3 bis 20 Gew.-%, bezogen auf die Gesamtmenge an eingesetztem Hydroxyurethan und/oder Hydroxyamid A) zum Einsatz.

Als Ausgangsverbindungen C) für das erfindungsgemäße Verfahren sind beliebige Diisocyanate mit aliphatisch, cycloaliphatisch, araliphatisch und/oder aromatisch gebundenen Isocyanatgruppen geeignet, die nach beliebigen Verfahren, z. B. durch Phosgenierung oder auf phosgenfreiem Weg, beispielsweise durch Urethanspaltung, hergestellt werden können. Geeignete Ausgangsdiisocyanate sind beispielsweise solche des Molekulargewichtsbereiches 140 bis 400 g/mol, wie z. B. 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan, 1,3- und 1,4-Bis(isocyanatomethyl)cyclohexan, 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1, 1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanatoadamantan, 1,3-Dimethyl-5,7-diisocyanatoadamantan, 1,3- und 1,4-Bis-(isocyanatomethyl)benzol, 1,3- und 1,4-Bis(1-isocyanato-1-methylethyl)-benzol (TMXDI), Bis(4-(1-isocyanato-1-methylethyl)phenyl)-carbonat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat und Naphthylen-1,5-diisocyanat sowie beliebige Gemische solcher Diisocyanate. Weitere ebenfalls geeignete Diisocyanate finden sich darüberhinaus beispielsweise in Justus Liebigs Annalen der Chemie Band 562 (1949) S. 75-136.

Als Ausgangskomponente C) bevorzugt sind die genannten Diisocyanate mit aliphatisch und/oder cycloaliphatisch gebundenen Isocyanatgruppen.

Besonders bevorzugte Ausgangskomponenten C) für das erfindungsgemäße Verfahren sind 1,6-Diisocyanatohexan, 1-Isocyanato-3,3,5-trimethyl-5-isocyanatomethylcyclohexan, 2,4'- und/oder 4,4'-Diisocyanatodicyclohexylmethan oder beliebige Gemische dieser Diisocyanate.

Zur Durchführung des erfindungsgemäßen Verfahrens werden die Silangruppen aufweisenden Hydroxyurethane und/oder Hydroxyamide A) und mindestens eine hydroxyfunktionelle Komponente B) mit den Diisocyanaten C) bei Temperaturen von 40 bis 200 °C, vorzugsweise 60 bis 180 °C, unter Einhaltung eines Äquivalent-Verhältnisses von Isocyanatgruppen zu gegenüber Isocyanaten reaktiven Gruppen von 4:1 bis 50:1, vorzugsweise von 5:1 bis 30:1, zu Allophanatpolyisocyanaten umgesetzt.

Im Sinne der vorliegenden Erfindung gelten dabei als "gegenüber Isocyanaten reaktive Gruppen" neben den Hydroxylgruppen der Komponenten A) und B) und den hieraus durch NCO/OH-Reaktion intermediär sich bildenden Urethangruppen im Falle der Verwendung von Hydroxyurethanen auch die hierin bereits enthaltenen Urethangruppen, da diese unter den Reaktionsbedingungen ebenfalls zu Allophanatgruppen weiterreagieren.

Das erfindungsgemäße Verfahren kann unkatalysiert als thermisch induzierte Allophanatisierung durchgeführt werden. Bevorzugt kommen zur Beschleunigung der Allophanatisierungsreaktion aber geeignete Katalysatoren zum Einsatz. Hierbei handelt es sich um die üblichen bekannten Allophanatisierungskatalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Allophanatisierungskatalysatoren sind insbesondere Zinkverbindungen, wie z. B. Zink-(II)-stearat, Zink-(II)-n-octanoat, Zink-(II)-2-ethyl-1-hexanoat, Zink-(II)-naphthenat oder Zink-(II)-acetylacetonat, Zinnverbindungen, wie z. B. Zinn-(II)-n-octanoat, Zinn-(II)-2-ethyl-1-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Zirconiumverbindungen, wie z. B. Zirconium-(IV)-2-ethyl-1-hexanoat, Zirconium-(IV)-neodecanoat, Zirconium-(IV)-naphthenat oder Zirconium-(IV)-acetylacetonat, Aluminium-tri(ethylaceto-acetat), Eisen-(III)-chlorid, Kaliumoctoat, Mangan- Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Geeignete, wenngleich weniger bevorzugte Katalysatoren für das erfindungsgemäße Verfahren sind auch solche Verbindungen, die neben der Allophanatisierungsreaktion auch die Trimerisierung von Isocyanatgruppen unter Bildung von Isocyanuratstrukturen katalysieren. Solche Katalysatoren sind beispielsweise in der EP-A-0 649 866 Seite 4, Zeile 7 bis Seite 5, Zeile 15 beschrieben.

Bevorzugte Katalysatoren für das erfindungsgemäße Verfahren sind Zink- und/oder Zirconiumverbindungen der obengenannten Art. Ganz besonders bevorzugt ist die Verwendung Zink-(II)-n-octanoat, Zink-(II)-2-ethyl-1-hexanoat und/oder Zink-(II)-stearat, Zirconium-(IV)-n-octanoat, Zirconium-(IV)-2-ethyl-1-hexanoat und/oder Zirconium-(IV)-neodecanoat.

Diese Katalysatoren kommen beim erfindungsgemäßen Verfahren, falls überhaupt, in einer Menge von 0,001 bis 5 Gew.-%, vorzugsweise 0,005 bis 1 Gew.-%, bezogen auf das Gesamtgewicht der Reaktionspartner A), B) und C) zum Einsatz und können sowohl vor Reaktionsbeginn als auch zu jedem Zeitpunkt der Reaktion zugesetzt werden.

Das erfindungsgemäße Verfahren wird vorzugsweise lösemittelfrei durchgeführt. Gegebenenfalls können aber auch geeignete, gegenüber den reaktiven Gruppen der Ausgangskomponenten inerte Lösemittel mitverwendet werden. Geeignete Lösemittel sind beispielsweise die an sich bekannten üblichen Lacklösemittel, wie z. B. Ethylacetat, Butylacetat, Ethylenglykolmonomethyl- oder -ethyletheracetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol, Testbenzin, höher substituierte Aromaten, wie sie beispielsweise unter den Bezeichnungen Solventnaphtha, Solvesso®, Isopar®, Nappar® (Deutsche EXXON CHEMICAL GmbH, Köln, DE) und Shellsol® (Deutsche Shell Chemie GmbH, Eschborn, DE) im Handel sind, aber auch Lösemittel wie Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

In einer möglichen Ausführungsform wird beim erfindungsgemäßen Verfahren das Ausgangsdiisocyanat C) bzw. eine Mischung verschiedener Ausgangsdiisocyanate gegebenenfalls unter Inertgas, wie beispielsweise Stickstoff, und gegebenenfalls in Gegenwart eines geeigneten Lösungsmittels der genannten Art bei einer Temperatur zwischen 20 und 100°C vorgelegt. Anschließend werden die hydroxyfunktionellen Ausgangsverbindungen A) und B) in beliebiger Reihenfolge nacheinander oder im Gemisch in der oben angegebenen Menge zugegeben und die Reaktionstemperatur für die Urethanisierung gegebenenfalls durch eine geeignete Maßnahme (Heizen oder Kühlen) auf eine Temperatur von 30 bis 120°C, vorzugsweise von 50 bis 100°C eingestellt. Im Anschluß an die Urethanisierungsreaktion, d. h. wenn der einem vollständigen Umsatz von Isocyanat- und Hydroxylgruppen theoretisch entsprechende NCO-Gehalt erreicht ist, kann die Allophanatisierung beispielsweise ohne Zusatz eines Katalysators durch Erhitzen des Reaktionsgemisches auf eine Temperatur von 140 bis 200°C gestartet werden. Vorzugsweise kommen zur Beschleunigung der Allophanatisierungsreaktion jedoch geeignete Katalysatoren der obengenannten Art zum Einsatz, wobei in Abhängigkeit von der Art und Menge des eingesetzten Katalysators Temperaturen im Bereich von 60 bis 140°C, vorzugsweise 80 bis 120°C, ausreichend sind.

In einer anderen möglichen Ausführungsform des erfindungsgemäßen Verfahrens wird der gegebenenfalls mitzuverwendenden Katalysator entweder der Silankomponente A), der hydroxyfunktionellen Komponente B) und/oder der Diisocyanatkomponente C) bereits vor Beginn der eigentlichen Umsetzung zugemischt. In diesem Fall reagieren die sich intermediär bildenden und bei Einsatz von Hydroxyurethanen A) in diesen bereits enthaltenen Urethangruppen spontan weiter zur gewünschten Allophanatstruktur. Bei dieser Art der einstufigen Reaktionsführung werden die gegebenenfalls den Katalysator enthaltenden Ausgangsdiisocyanate C) gegebenenfalls unter Inertgas, wie beispielsweise Stickstoff, und gegebenenfalls in Gegenwart eines geeigneten Lösungsmittels der genannten Art, in der Regel bei für die Allophanatisierung optimalen Temperaturen im Bereich von 60 bis 140°C, vorzugsweise 80 bis 120°C, vorgelegt und mit den gegebenenfalls den Katalysator enthaltenden hydroxyfunktionellen Komponenten A) und B) zur Reaktion gebracht.

Es ist aber auch möglich, den Katalysator dem Reaktionsgemisch zu einem beliebigen Zeitpunkt während der Urethanisierungsreaktion zuzusetzen. Bei dieser Ausführungsform des erfindungsgemäßen Verfahrens wird für die vor der Katalysatorzugabe ablaufende reine Urethanisierungsreaktion in der Regel eine Temperatur im Bereich von 30 bis 120°C, vorzugsweise von 50 bis 100°C, eingestellt. Nach Zugabe eines geeigneten Katalysators wird die Allophantisierungreaktion schließlich bei Temperaturen von 60 bis 140°C, vorzugsweise von 80 bis 120°C, durchgeführt.

Der Verlauf der Umsetzung kann beim erfindungsgemäßen Verfahren durch z. B. titrimetrische Bestimmung des NCO-Gehaltes verfolgt werden. Nach Erreichen des angestrebten NCO-Gehaltes, vorzugsweise wenn der Allophanatisierungsgrad (d. h. der aus dem NCO-Gehalt errechenbare prozentuale Anteil der zu Allophanatgruppen umgesetzten, aus den Hydroxylgruppen der Komponente A) und B) sich intermediär bildenden sowie bei Einsatz von Hydroxyurethanen A) in diesen bereits enthaltenen Urethangruppen) des Reaktionsgemisches mindestens 80 %, besonders bevorzugt mindestens 90 % beträgt, ganz besonders bevorzugt nach vollständiger Allophanatisierung, wird die Reaktion abgebrochen. Dies kann bei rein thermischer Reaktionsführung beispielsweise durch Abkühlen des Reaktionsgemisches auf Raumtemperatur erfolgen. Bei der bevorzugten Mitverwendung eines Allophanatisierungskatalysators der genannten Art wird die Umsetzung im allgemeinen aber durch Zugabe geeigneter Katalysatorgifte, beispielsweise Säuren, wie Phosphorsäure, oder Säurechloride, wie Benzoylchlorid oder Isophthaloyldichlorid, abgestoppt.

Vorzugsweise wird das Reaktionsgemisch anschließend durch Dünnschichtdestillation im Hochvakuum, beispielsweise bei einem Druck von unter 1,0 mbar, vorzugsweise unter 0,5 mbar, besonders bevorzugt unter 0,2 mbar, unter möglichst schonenden Bedingungen, beispielsweise bei einer Temperatur von 100 bis 200 °C, vorzugsweise von 120 bis 180 °C, von flüchtigen Bestandteilen (überschüssigen monomeren Diisocyanaten, gegebenenfalls bei der Herstellung der Ausgangsverbindungen A) im Überschuss eingesetzten cyclischen Carbonaten oder Lactonen, gegebenenfalls mitverwendeten Lösungsmitteln und, bei Verzicht auf den Einsatz eines Katalysatorgiftes, gegebenenfalls aktivem Katalysator) befreit.

Die anfallenden Destillate, die neben den nicht umgesetzten monomeren Ausgangsdiisocyanaten, gegebenenfalls überschüssig eingesetzte cyclischen Carbonate oder Lactone und gegebenenfalls mitverwendete Lösungsmittel bei Verzicht auf den Einsatz eines Katalysatorgiftes gegebenenfalls aktiven Katalysator enthalten, können problemlos zur erneuten Oligomerisierung verwendet werden.

In einer weiteren Ausführungsform des erfindungsgemäßen Verfahrens werden die genannten flüchtigen Bestandteile durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan vom Oligomerisierungsprodukt abgetrennt.

Unabhängig von der Art der Aufarbeitung erhält man als Produkte des erfindungsgemäßen Verfahrens klare, praktisch farblose Polyisocyanate, die Farbzahlen von unter 200 APHA, vorzugsweise von unter 100 APHA, besonders bevorzugt von unter 80 APHA, eine mittlere NCO-Funktionalität von 2,4 bis 6,0, vorzugsweise 2,6 bis 5,0, besonders bevorzugt 3,2 bis 4,8, und einen NCO-Gehalt von 6,0 bis 21,0 Gew.-%, vorzugsweise 10,0 bis 19,0 Gew.-%, besonders bevorzugt 12,0 bis 18,0 Gew.-%, aufweisen.

Die erfindungsgemäßen Allophanatpolyisocyanate stellen wertvolle Ausgangsmaterialien zur Herstellung von Polyurethan-Kunststoffen nach dem Isocyanat-Polyadditionsverfahren dar.

Sie können aufgrund ihrer vergleichsweise niedrigen Viskosität lösemittelfrei eingesetzt werden, lassen sich bei Bedarf aber auch mit üblichen Lösemitteln, beispielsweise den obengenannten, beim erfindungsgemäßen Verfahren gegebenenfalls mitzuverwendenden inerten Lacklösemitteln, trübungsfrei verdünnen.

Die erfindungsgemäß erhältlichen Silan-modifizierten Allophanatpolyisocyanate eignen sich in hervorragender Weise als Härter für Zweikomponenten-Polyurethanlacke, in denen als Polyhydroxylverbindungen die üblichen Polyetherpolyole, Polyesterpolyole Polycarbonatpolyole und/oder Polyacrylatpolyole als Reaktionspartner für die Polyisocyanate vorliegen. Besonders bevorzugte hydroxyfunktionelle Reaktionspartner für die erfindungsgemäßen Verfahrensprodukte sind Hydroxylgruppen aufweisende Polyacrylate, d. h. Polymerisate bzw. Copolymerisate von (Meth)acrylsäurealkylestern, gegebenenfalls mit Styrol oder anderen copolymerisierbaren olefinisch ungesättigten Monomeren.

Die erfindungsgemäßen Verfahrensprodukte eignen sich in ganz besonderer Weise auch als Härterkomponenten für aminofunktionelle Bindemittel, insbesondere als Vernetzer in festkörperreichen 2K-Beschichtungssystemen auf Basis von Polyasparaginsäureestern, wie sie beispielsweise in der eigenen nicht vorveröffentlichten deutschen Patentanmeldung mit der Anmeldenummer 102009016173.2 beschrieben sind.

Auch Polyamine, deren Aminogruppen in blockierter Form vorliegen, wie z. B. Polyketimine, Polyaldimine oder Oxazolane, stellen geeignete Reaktionspartner für die erfindungsgemäßen Verfahrensprodukte dar. Derartige blockierte Polyamine bilden unter Feuchtigkeitseinfluß freie Aminogruppen und im Falle der Oxazolane auch freie Hydroxylgruppen zurück, die dann für die Vernetzung mit Isocyanatgruppen zur Verfügung stehen.

Mit den erfindungsgemäßen Silangruppen enthaltenden Polyisocyanaten hergestellte Beschichtungen weisen eine aussergewöhnlich gute Haftung auf kritischen metallischen Oberflächen auf und ermöglichen so eine direkte Applikation auf nicht grundierten Werkstoffen. Im Vergleich zu den Allophanatpolyisocyanaten der EP-A 2 014 692 zeigen sie dabei eine deutlich verbessertes Trocknungsverhalten, insbesondere auch in Kombination mit Reaktionspartnern niedriger Funktionalität, wie z. B. den difunktionellen Polyasparaginsäureestern der aus der EP-B 0 403 921 bekannten Art.

Im allgemeinen besitzen die mit den erfindungsgemäßen Silan-modifizierten Allophanatpolyisocyanaten formulierten Beschichtungsmittel, denen gegebenenfalls die auf dem Lacksektor üblichen Hilfs- und Zusatzmittel, wie z. B. Verlaufshilfsmittel, Farbpigmente, Füllstoffe oder Mattierungsmittel, einverleibt werden können, schon bei Raumtemperaturtrocknung gute lacktechnische Eigenschaften. Selbstverständlich lassen sie sich jedoch auch unter forcierten Bedingungen bei erhöhter Temperatur bzw. durch Einbrennen bei Temperaturen bis 260°C trocknen.

Zur Steuerung der Aushärtegeschwindigkeit können bei der Formulierung der Beschichtungsmittel geeignete Katalysatoren mitverwendet werden, beispielsweise die in der Isocyanatchemie üblichen Katalysatoren, wie z. B. tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octanoat, Zinn(II)-ethylcaproat, Dibutylzinn(IV)-dilaurat, Wismut(III)-2-ethylhexanoat, Wismut(III)-octoat oder Molybdänglykolat. Daneben können auch Katalysatoren mitverwendet werden, die die Hydrolyse und Kondensation von Alkoxysilangruppen oder deren Reaktion mit den Hydroxylgruppen der als Bindemittel eingesetzten Polyolkomponenten beschleunigen. Derartige Katalysatoren sind neben vorstehend genannten Isocyanatkatalysatoren beispielsweise auch Säuren, wie z. B. p-Toluolsulfonsäure, Trifluormethansulfonsäure, Essigsäure, Trifluoressigsäure und Dibutylphosphat, Basen, wie z. B. N-substituierte Amidine wie 1,5-Diazabicyclo[4.3.0]non-5-en (DBN) und 1,5-Diazabicyclo[5.4.0]undec-7-en (DBU), aber auch Metallsalze oder metallorganische Verbindungen, wie z. B. Tetraisopropyltitanat, Tetrabutyltitanat, Titan(IV)acetylacetonat, Aluminiumacetylacetonat, Aluminiumtriflat oder Zinntriflat.

Selbstverständlich können die erfindungsgemäßen Silan-modifizierten Allophanatpolyisocyanate auch in mit aus der Polyurethanchemie an sich bekannten Blockierungsmitteln blockierter Form in Kombination mit den obengenannten Lackbindemitteln oder Lackbindemittelkomponenten im Sinne von Einkomponenten-PUR-Einbrennsystemen eingesetzt werden. Geeignete Blockierungsmittel sind beispielsweise Malonsäurediethylester, Acetessigester, aktivierte cyclische Ketone, wie z. B. Cyclopentanon-2-carboxymethylester und -carboxyethylester, Acetonoxim, Butanonoxim, ε-Caprolactam, 3,5-Dimethylpyrazol, 1,2,4-Triazol, Dimethyl-1,2,4-triazol, Imidazol, Benzyl-tert.-butylamin oder beliebige Gemische dieser Blockierungsmittel.

Gegenstand der Erfindung ist daher auch die Verwendung der erfindungsgemäßen Allophanatgruppen enthaltenden Polyisocyanate zur Herstellung von mit aus der Polyurethanchemie bekannten Blockierungsmitteln blockierten Polyisocyanaten, sowie die daraus resultierenden blockierten Polyisocyanate selbst.

Die erfindungsgemäßen Silan-modifizierten Allophanatpolyisocyanate eignen sich auch als Vernetzerkomponenten für in Wasser gelöst oder dispergiert vorliegende Bindemittel oder Bindemittelkomponenten mit gegenüber Isocyanatgruppen reaktionsfähigen Gruppen, insbesondere alkoholischen Hydroxylgruppen, bei der Herstellung wäßriger Zweikomponenten-Polyurethansysteme. Sie können dabei aufgrund ihrer niedrigen Viskosität entweder als solche, d. h. in hydrophober Form, oder aber auch in nach bekannten Verfahren, z. B. gemäß EP-B 0 540 985, EP-B 0 959 087 oder EP-B 1 287 052, hydrophil modifizierter Form eingesetzt werden.

Gegebenenfalls können den mit den erfindungsgemäßen Silan-modifizierten Allophanatpolyisocyanaten formulierten Beschichtungssystemen auch beliebige weitere hydrolysierbare Silanverbindungen, wie z. B. Tetramethoxysilan, Tetraethoxysilan, Methyltrimethoxysilan, Methyltriethoxysilan, Ethyltriethoxysilan, Isobutyltrimethoxysilan, Isobutyltriethoxysilan, Octyltriethoxysilan, Octyltrimethoxysilan, (3-Glycidyloxypropyl)methyldiethoxysilan, (3-Glycidyloxypropyl)trimethoxy-silan, Phenyltrimethoxysilan oder Phenyltriethoxysilan, oder Gemische solcher Silanverbindungen als Reaktionspartner zugesetzt werden.

In allen Lackkombinationen liegen die erfindungsgemäßen Verfahrensprodukte und der Reaktionspartner in solchen Mengen vor, dass auf jede gegebenenfalls blockierte Isocyanatgruppe 0,5 bis 3, vorzugsweise 0,6 bis 2,0, besonders bevorzugt 0,8 bis 1,6 gegebenenfalls blockierte, gegenüber Isocyanaten reaktive Gruppen entfallen.

Gegebenenfalls können die erfindungsgemäßen Silan-modifizierten Allophanatpolyisocyanate in untergeordneten Mengen aber auch nichtfunktionellen Lackbindemitteln zur Erzielung ganz spezieller Eigenschaften, beispielsweise als Additiv zur Haftverbesserung zugemischt werden.

Als Untergründe für die mit Hilfe der erfindungsgemäßen Silan-modifizierten AIlophanatpolyisocyanate formulierten Beschichtungen kommen beliebige Substrate in Betracht, wie z. B. Metall, Holz, Glas, Stein, keramische Materialien, Beton, harte und flexible Kunststoffe, Textilien, Leder und Papier, die ungeachtet ihrer guten Direkthaftung auf einer Vielzahl von Materialien vor der Beschichtung gegebenenfalls auch mit üblichen Grundierungen versehen werden können.

Weitere Gegenstände dieser Erfindung sind somit Beschichtungsmittel enthaltend die erfindungsgemäßen Allophanatgruppen tragenden Polyisocyanate, sowie die mit diesen Beschichtungsmitteln beschichteten Substrate.

### Beispiele

Alle Prozentangaben beziehen sich, soweit nichts Anderslautendes vermerkt, auf das Gewicht.

Die Bestimmung der NCO-Gehalte erfolgte nach DIN EN ISO 11909.

Sämtliche Viskositätsmessungen erfolgten mit einem Physica MCR 51 Rheometer der Fa. Anton Paar Germany GmbH (Ostfildern) nach DIN EN ISO 3219.

Die Hazen-Farbzahlen wurden an einem LICO 400 Farbmessgerät der Fa. Hach Lange GmbH, Düsseldorf, ermittelt.

Die im Falle der Ausgangsverbindungen A) angegebenen OH-Zahlen wurden aus dem sich theoretisch ergebenden Molekulargewicht der Idealstruktur (1: 1-Addukt) berechnet.

### Herstellung der Ausgangsverbindungen A)

### Silangruppen aufweisendes Hydroxyurethan A1)

221 g (1,0 mol) 3-Aminopropyltriethoxysilan wurden bei Raumtemperatur unter trockenem Stickstoff vorgelegt. Hierzu gab man unter Rühren innerhalb von 15 min 88 g (1,0 mol) Ethylencarbonat, wobei sich die Mischung aufgrund der freiwerdenden Reaktionswärme anfänglich bis auf 34°C erwärmte, und rührte anschließend ohne weiteres Heizen 18 Stunden bei Raumtemperatur nach. Eine Amin-Titration mit 1N HCl zeigte einen Umsatz von 99,8 %.

Man erhielt 2-Hydroxyethyl[3-(triethoxysilyl)propyl]urethan als farblose Flüssigkeit.

| | |
|---|---|
| Viskosität (23 °C): | 69 mPas |
| OH-Zahl (ber.): | 181 mg KOH/g |
| Molekulargewicht (ber.): | 309 g/mol |

### Silangruppen aufweisendes Hydroxyurethan A2)

179 g (1,0 mol) 3-Aminopropyltrimethoxysilan und 88 g (1,0 mol) Ethylencarbonat wurden nach dem für Ausgangsverbindung A1) beschriebenen Verfahren miteinander zur Reaktion gebracht. Der Umsatz (Amin-Titration mit 1N HCl) nach 18 Stunden betrug 99,6 %.

Man erhielt 2-Hydroxyethyl[3-(trimethoxysilyl)propyl]urethan als farblose Flüssigkeit.

| | |
|---|---|
| Viskosität (23 °C): | 245 mPas |
| OH-Zahl (ber.): | 210 mg KOH/g |
| Molekulargewicht (ber.): | 267 g/mol |

### Silangruppen aufweisendes Hydroxyurethan A3)

221 g (1,0 mol) 3-Aminopropyltriethoxysilan und 102 g (1,0 mol) Propylencarbonat wurden nach dem für Ausgangsverbindung A1) beschriebenen Verfahren miteinander zur Reaktion gebracht. Der Umsatz (Amin-Titration mit 1N HCl) nach 18 Stunden betrug 99,9%.

Man erhielt ein Gemisch von 2-Hydroxypropyl[3-(triethoxysilyl)propyl]urethan und 2-Hydroxy-1-methylethyl[3-(triethoxysilyl)propyl]urethan als farblose Flüssigkeit.

| | |
|---|---|
| Viskosität (23 °C): | 86 mPas |
| OH-Zahl (ber.): | 173 mg KOH/g |
| Molekulargewicht (ber.): | 323 g/mol |

### Silangruppen aufweisendes Hydroxyamid A4)

221 g (1,0 mol) 3-Aminopropyltriethoxysilan und 86 g (1,0 mol) γ-Butyrolacton wurden nach dem für Ausgangsverbindung A1) beschriebenen Verfahren miteinander zur Reaktion gebracht. Der Umsatz (Amin-Titration mit 1N HCl) nach 18 Stunden betrug 99,4 %.

Man erhielt 4-Hydroxy-N-[3-(triethoxysilyl)propyl]butanamid als farblose Flüssigkeit

| | |
|---|---|
| Viskosität (23 °C): | 326 mPas |
| OH-Zahl (ber.): | 199 mg KOH/g |
| Molekulargewicht (ber.): | 281 g/mol |

### Beispiel 1 (erfindungsgemäß)

2520,0 g (15,0 mol) Hexamethylendiisocyanat (HDI) wurden bei einer Temperatur von 80°C unter trockenem Stickstoff mit 216,3 g (0,7 mol) des Silangruppen aufweisenden Hydroxyurethans A1) und 18,6 g (0,3 mol) 1,2-Ethandiol, entsprechend einer Menge von 8,6 Gew.-% bezogen auf die Menge an Hydroxyurethan A1), versetzt und 3 Stunden gerührt, bis ein NCO-Gehalt von 43,8 %, entsprechend einer vollständigen Urethanisierung, erreicht war. Anschließend wurde das Reaktionsgemisch auf 95°C aufgeheizt und 0,5 g Zink(II)-2-ethyl-1-hexanoat als Allophanatisierungskatalysator zugegeben. Aufgrund der exotherm einsetzenden Reaktion stieg die Temperatur der Mischung bis auf 110°C an. Nach ca. 30 min betrug der NCO-Gehalt des Reaktionsgemisches 40,7 %. Der Katalysator wurde durch Zugabe von 1 g Benzoylchlorid deaktiviert und das nicht umgesetzte monomere HDI bei einer Temperatur von 130°C und einem Druck von 0,1 mbar im Dünnschichtverdampfer abgetrennt. Man erhielt 697 g eines praktisch farblosen, klaren Allophanat-Polyisocyanates mit folgenden Kenndaten:

| | | |
|---|---|---|
| NCO-Gehalt: | 16,2 % | |
| monomeres HDI: | 0,04 % | |
| Viskosität (23°C): | 1180 mPas | |
| Farbzahl (APHA): | 20 Hazen | |
| NCO-Funktionalität: | > 3,3 | (berechnet) |
| Silangruppen-Gehalt: | 8,1 % | (berechnet als SiO₃; Mol.-Gewicht = 76 g/mol) |

### Beispiel 2 (erfindungsgemäß)

Nach dem in Beispiel 1 beschriebenen Verfahren wurden 1680,0 g (10,0 mol) HDI mit 247,2 g (0,8 mol) des Silangruppen aufweisenden Hydroxyurethans A1) und 15,2 g (0,2 mol) 1,3-Propandiol, entsprechend einer Menge von 6,1 Gew.-% bezogen auf die Menge an Hydroxyurethan A1), umgesetzt. Die Allophanatisierungsreaktion wurde bei einem NCO-Gehalt von 40,7 % durch Zugabe von 0,5 g Zink(II)-2-ethyl-1-hexanoat gestartet. Nach Erreichen eines NCO-Gehaltes von 36,3 % wurde das Reaktionsgemisch mit 1 g Benzoylchlorid gestoppt und wie in Beispiel 1 beschrieben aufgearbeitet. Man erhielt 673 g eines praktisch farblosen, klaren Allophanat-Polyisocyanates mit folgenden Kenndaten:

| | | |
|---|---|---|
| NCO-Gehalt: | 14,9 % | |
| monomeres HDI: | 0,07 % | |
| Viskosität (23°C): | 1550 mPas | |
| Farbzahl (APHA): | 21 Hazen | |
| NCO-Funktionalität: | > 3,2 | (berechnet) |
| Silangruppen-Gehalt: | 8,7% | (berechnet als SiO₃; Mol.-Gewicht = 76 g/mol) |

### Beispiel 3 (erfindungsgemäß)

Nach dem in Beispiel 1 beschriebenen Verfahren wurden 2520,0 g (15,0 mol) HDI mit 200,9 g (0,65 mol) des Silangruppen aufweisenden Hydroxyurethans A1) und 31,5 g (0,35 mol) 1,3-Butandiol, entsprechend einer Menge von 15,7 Gew.-% bezogen auf die Menge an Hydroxyurethan A1), umgesetzt. Die Allophanatisierungsreaktion wurde bei einem NCO-Gehalt von 43,7 % durch Zugabe von 0,5 g Zink(II)-2-ethyl-1-hexanoat gestartet. Nach Erreichen eines NCO-Gehaltes von 40,7 % wurde das Reaktionsgemisch mit 1 g Benzoylchlorid gestoppt und wie in Beispiel 1 beschrieben aufgearbeitet. Man erhielt 631 g eines praktisch farblosen, klaren Allophanat-Polyisocyanates mit folgenden Kenndaten:

| | | |
|---|---|---|
| NCO-Gehalt: | 16,1 % | |
| monomeres HDI: | 0,08 % | |
| Viskosität (23°C): | 1250 mPas | |
| Farbzahl (APHA): | 19 Hazen | |
| NCO-Funktionalität: | > 3,4 | (berechnet) |
| Silangruppen-Gehalt: | 6,9 % | (berechnet als SiO₃; Mol.-Gewicht = 76 g/mol) |

### Beispiel 4 (erfindungsgemäß)

Nach dem in Beispiel 1 beschriebenen Verfahren wurden 2520,0 g (15,0 mol) HDI mit 278,1 g (0,9 mol) des Silangruppen aufweisenden Hydroxyurethans A1) und 13,4 g (0,1 mol) Trimethylolpropan, entsprechend einer Menge von 4,8 Gew.-% bezogen auf die Menge an Hydroxyurethan A1), umgesetzt. Die Allophanatisierungsreaktion wurde bei einem NCO-Gehalt von 43,0 % durch Zugabe von 0,5 g Zink(II)-2-ethyl-1-hexanoat gestartet. Nach Erreichen eines NCO-Gehaltes von 39,9 % wurde das Reaktionsgemisch mit 1 g Benzoylchlorid gestoppt und wie in Beispiel 1 beschrieben aufgearbeitet. Man erhielt 662 g eines praktisch farblosen, klaren Allophanat-Polyisocyanates mit folgenden Kenndaten:

| | | |
|---|---|---|
| NCO-Gehalt: | 13,8 % | |
| monomeres HDI: | 0,06 % | |
| Viskosität (23°C): | 1280 mPas | |
| Farbzahl (APHA): | 22 Hazen | |
| NCO-Funktionalität: | > 3,3 | (berechnet) |
| Silangruppen-Gehalt: | 9,5 % | (berechnet als SiO₃; Mol.-Gewicht = 76 g/mol) |

### Beispiel 5 (erfindungsgemäß)

Nach dem in Beispiel 1 beschriebenen Verfahren wurden 2520,0 g (15,0 mol) HDI mit 186,9 g (0,7 mol) des Silangruppen aufweisenden Hydroxyurethans A2) und 27,0 g (0,3 mol) 1,3-Butandiol, entsprechend einer Menge von 14,4 Gew.-% bezogen auf die Menge an Hydroxyurethan A2), umgesetzt. Die Allophanatisierungsreaktion wurde bei einem NCO-Gehalt von 44,1 % durch Zugabe von 0,5 g Zink(II)-2-ethyl-1-hexanoat gestartet. Nach Erreichen eines NCO-Gehaltes von 41,0 % wurde das Reaktionsgemisch mit 1 g Benzoylchlorid gestoppt und wie in Beispiel 1 beschrieben aufgearbeitet. Man erhielt 667 g eines praktisch farblosen, klaren Allophanat-Polyisocyanates mit folgenden Kenndaten:

| | | |
|---|---|---|
| NCO-Gehalt: | 16,2 % | |
| monomeres HDI: | 0,06 % | |
| Viskosität (23°C): | 1660 mPas | |
| Farbzahl (APHA): | 22 Hazen | |
| NCO-Funktionalität: | > 3,3 | (berechnet) |
| Silangruppen-Gehalt: | 8,0 % | (berechnet als SiO₃; Mol.-Gewicht = 76 g/mol) |

### Beispiel 6 (erfindungsgemäß)

Nach dem in Beispiel 1 beschriebenen Verfahren wurden 2520,0 g (15,0 mol) HDI mit 226,1 g (0,7 mol) des Silangruppen aufweisenden Hydroxyurethans A3) und 27,0 g (0,3 mol) 1,3-Butandiol, entsprechend einer Menge von 11,9 Gew.-% bezogen auf die Menge an Hydroxyurethan A3), umgesetzt. Die Allophanatisierungsreaktion wurde bei einem NCO-Gehalt von 43,5 % durch Zugabe von 0,5 g Zink(II)-2-ethyl-1-hexanoat gestartet. Nach Erreichen eines NCO-Gehaltes von 40,4 % wurde das Reaktionsgemisch mit 1 g Benzoylchlorid gestoppt und wie in Beispiel 1 beschrieben aufgearbeitet. Man erhielt 718 g eines praktisch farblosen, klaren Allophanat-Polyisocyanates mit folgenden Kenndaten:

| | | |
|---|---|---|
| NCO-Gehalt: | 15,5 % | |
| monomeres HDI: | 0,06 % | |
| Viskosität (23°C): | 1270 mPas | |
| Farbzahl (APHA): | 23 Hazen | |
| NCO-Funktionalität: | > 3,3 | (berechnet) |
| Silangruppen-Gehalt: | 7,4 % | (berechnet als SiO₃; Mol.-Gewicht = 76 g/mol) |

### Beispiel 7 (erfindungsgemäß)

Nach dem in Beispiel 1 beschriebenen Verfahren wurden 2520,0 g (15,0 mol) HDI mit 278,1 g (0,9 mol) des Silangruppen aufweisenden Hydroxyurethans A1) und 64,0 g (0,1 mol) eines linearen Polycaprolactonpolyesters der OH-Zahl 175 mg KOH/g entsprechend einer Menge von 35,9 Gew.-% bezogen auf die Menge an Hydroxyurethan A1), umgesetzt. Die Allophanatisierungsreaktion wurde bei einem NCO-Gehalt von 42,4 % durch Zugabe von 0,5 g Zink(II)-2-ethyl-1-hexanoat gestartet. Nach Erreichen eines NCO-Gehaltes von 39,5 % wurde das Reaktionsgemisch mit 1 g Benzoylchlorid gestoppt und wie in Beispiel 1 beschrieben aufgearbeitet. Man erhielt 740 g eines praktisch farblosen, klaren Allophanat-Polyisocyanates mit folgenden Kenndaten:

| | | |
|---|---|---|
| NCO-Gehalt: | 13,8 % | |
| monomeres HDI: | 0,04 % | |
| Viskosität (23°C): | 1000 mPas | |
| Farbzahl (APHA): | 20 Hazen | |
| NCO-Funktionalität: | > 3,1 | (berechnet) |
| Silangruppen-Gehalt: | 9,2 % | (berechnet als SiO₃; Mol.-Gewicht = 76 g/mol) |

### Beispiel 8 (Vergleich gemäß EP-A 2 014 692)

Nach dem in Beispiel 1 beschriebenen Verfahren wurden 1680 g (10,0 mol) Hexamethylendüsocyanat (HDl) mit 309 g (1,0 mol) des Silangruppen aufweisenden Hydroxyurethans A1) umgesetzt. Die Allophanatisierungsreaktion wurde bei einem NCO-Gehalt von 40,1 % durch Zugabe von 0,5 g Zink(II)-2-ethyl-1-hexanoat gestartet. Nach Erreichen eines NCO-Gehaltes von 35,9 % wurde das Reaktionsgemisch mit 1 g Benzoylchlorid gestoppt und wie in Beispiel 1 beschrieben aufgearbeitet. Man erhielt 789 g eines praktisch farblosen, klaren Allophanat-Polyisocyanates mit folgenden Kenndaten:

| | | |
|---|---|---|
| NCO-Gehalt: | 13,7 % | |
| monomeres HDI: | 0,03 % | |
| Viskosität (23°C): | 1270 mPas | |
| Farbzahl (APHA): | 21 Hazen | |
| NCO-Funktionalität: | > 3 | (berechnet) |
| Silangruppen-Gehalt: | 9,6 % | (berechnet als SiO₃; Mol.-Gewicht = 76 g/mol) |

### Beispiel 9 (Vergleich gemäß EP-A 2 014 692)

Nach dem in Beispiel 1 beschriebenen Verfahren wurden 1680 g (10,0 mol) HDI mit 267 g (1,0 mol) des Silangruppen aufweisenden Hydroxyurethans A2) umgesetzt. Die Allophanatisierungsreaktion wurde bei einem NCO-Gehalt von 41,0 % durch Zugabe von 0,5 g Zink(II)-2-ethyl-1-hexanoat gestartet. Nach Erreichen eines NCO-Gehaltes von 36,7 % wurde das Reaktionsgemisch mit 1 g Benzoylchlorid gestoppt und wie in Beispiel 1 beschrieben aufgearbeitet. Man erhielt 690 g eines praktisch farblosen, klaren Allophanat-Polyisocyanates mit folgenden Kenndaten:

| | | |
|---|---|---|
| NCO-Gehalt: | 14,2 % | |
| monomeres HDI: | 0,06 % | |
| Viskosität (23°C): | 3050 mPas | |
| Farbzahl (APHA): | 19 Hazen | |
| NCO-Funktionalität: | > 3 | (berechnet) |
| Silangruppen-Gehalt: | 11,0 % | (berechnet als SiO₃; Mol.-Gewicht = 76 g/mol) |

### Beispiel 10 und 11 (erfindungsgemäß und Vergleich)

Aus den nachfolgend aufgeführten Rohstoffen wurde in den angegebenen Mengenverhältnissen durch 10 minütiges Vordispergieren mit Hilfe eines Dissolvers und anschließendes Anreiben auf einer Perlmühle unter Kühlung eine aminofunktionelle Bindemittelkomponente hergestellt:

| | |
|---|---|
| Desmophen NH 1520¹⁾ | 24,32 Gew.-Teile |
| Desmophen VP LS 2142 ²⁾ | 7,68 Gew.-Teile |
| UOP-L Pulver³⁾ | 3,26 Gew.-Teile |
| Butylacetat | 3,34 Gew.-Teile |
| Bentone 38, 10 %iger Aufschluss⁴⁾ | 3,76 Gew.-Teile |
| Disperbyk^{®} 110 ⁵⁾ | 1,04 Gew.-Teile |
| Byk^{®} 085 ⁵⁾ | 1,14 Gew.-Teile |
| Chromoxidgrün GNM ⁶⁾ | 8,29 Gew.-Teile |
| Bayferrox^{®} 415⁶⁾ | 1,48 Gew.-Teile |
| Tronox^{®} R-KB-4 ⁷⁾ | 11,88 Gew.-Teile |
| Schwerspat EWO⁸⁾ | 31,58 Gew.-Teile |
| Cab-O-Sil^{®} TS 720 ⁹⁾ | 1,51 Gew.-Teile |
| Tinuvin^{®} 292 ¹⁰⁾ | 0,72 Gew.-Teile |

| | |
|---|---|
| ¹⁾ Polyasparaginsäureester, difunktionell (Lieferform 100 %, Äquivalentgewicht: 290 g/val NH), Bayer MaterialScience AG, 51368 Leverkusen, Deutschland ²⁾ Blockiertes cycloaliphatisches Diamin (Lieferform 100 %, Äquivalentgewicht: 139 g/val NH), Bayer MaterialScience AG, 51368 Leverkusen, Deutschland ³⁾ Molekularsieb, UOP GmbH, 51368 Leverkusen, Deutschland ⁴⁾ Schwebemittel, Elementis Specialties, 9000 Gent / Belgien ⁵⁾ Dispergieradditive/Entlüftungsmittel, Byk-Chemie GmbH, 46483 Wesel, Deutschland ⁶⁾ Pigment, Lanxess, 51369 Leverkusen, Deutschland ⁷⁾ Pigment, Tronox Pigments GmbH, 42789 Krefeld, Deutschland ⁸⁾ Füllstoff, Sachtleben Chemie GmbH, 47198 Duisburg, Deutschland ⁹⁾ Rheologie Additiv, Cabot GmbH, 63457 Hanau, Deutschland ¹⁰⁾ Lichtschutzmittel, Ciba, Basel, Schweiz | |

Zur Herstellung eines verarbeitungsfertigen erfindungsgemäßen Beschichtungsmittels wurden dieser Bindemittelkomponente 39,67 Gew.-Teile des erfindungsgemäßen Silangruppen enthaltenden Polyisocyanats aus Beispiel 1, entsprechend einem Äquivalentverhältnis von Isocyanatgruppen zu gegenüber Isocyanaten reaktiven Gruppen von 1,1 : 1, zugesetzt und gut eingearbeitet.

Zum Vergleich wurden in einem zweiten Lackansatz der gleichen Bindemittelkomponente 46,91 Gew.-Teile des Silangruppen enthaltenden Polyisocyanats aus Beispiel 8, ebenfalls entsprechend einem Äquivalentverhältnis von Isocyanatgruppen zu gegenüber Isocyanaten reaktiven Gruppen von 1,1 : 1, zugesetzt und ebenfalls gut eingearbeitet.

Die beiden so formulierten Lacke wurden mit Hilfe einer Airless-Spritzanlage jeweils in einer Naßfilm-Schichtdicke von ca. 120 µm auf ein entfettetes Aluminiumblech sowie auf kalt gewalzten Stahl appliziert und bei Raumtemperatur (ca. 23°C) und einer relativen Luftfeuchtigkeit von ca. 50 % ausgehärtet.

Die Topfzeiten der Lackansätze betrug in beiden Fällen ca. 2 Stunden. Tabelle 1 zeigt die Ergebnisse der lacktechnischen Prüfungen.

**Tabelle 1: Trocknung (nach DIN 53 150) und Haftfestigkeit (Gitterschnittprüfungen nach DIN EN ISO 2409)**

| | | **Beispiel 10** | **Beispiel 11** |
|---|---|---|---|
| | | (erfindungsgemäß) | (Vergleich) |
| | | | |
| Trockenzeiten (nach DIN 53 150) | T1 = | 1 h 05 min | 1 h 25 min |
| | T6 = | 2 h 35 min | 4 h 10 min |
| | | | |
| Haftfestigkeit auf Aluminium | nach 12 h | GT 0 | GT 0 |
| nach 14d Schwitzwasserbelastung ^{*)} | | GT 0 | GT 0 |
| Haftfestigkeit auf kalt gewalztem Stahl | nach 12 h | GT 0 | GT 0 |
| nach 14d Schwitzwasserbelastung ^{*)} | | GT 0 | GT 0 |

| | | | |
|---|---|---|---|
| nach DIN EN ISO 6270 | | | |

Der Vergleich zeigt, dass der unter Verwendung des erfindungsgemäßen Silangruppen enthaltenden Polyisocyanatvernetzers aus Beispiel 1 hergestellte Lack (Beispiel 10) im Vergleich zu dem mit dem Silangruppen enthaltenden Polyisocyanat aus Beispiel 8 gemäß EP-A 2 014 692 vernetzten Lack (Beispiel 11) bei unverändert hervorragender Haftung deutlich verkürzte Trockenzeiten zeigt.

## Patentansprüche

1. Verfahren zur Herstellung Allophanatgruppen enthaltender Polyisocyanate durch Umsetzung
A) mindestens eines - aus der Reaktion von Aminosilanen mit cyclischen Carbonaten bzw. Lactonen erhältlichen - Silangruppen aufweisenden Hydroxyurethans und/oder Hydroxyamids
und
B) mindestens einer weiteren mehrwertigen hydroxyfunktionellen Komponente des Molekulargewichtsbereiches 62 bis 2000 g/mol
mit einer bezogen auf die NCO-reaktiven Gruppen der Komponenten A) und B) molar überschüssigen Menge an
C) mindestens einem Diisocyanat mit aliphatisch, cycloaliphatisch, araliphatisch und/oder aromatisch gebundenen Isocyanatgruppen
und gegebenenfalls nachfolgender Entfernung des nicht umgesetzten Diisocyanatüberschusses,
wobei als Aminosilane solche der allgemeinen Formel (I) 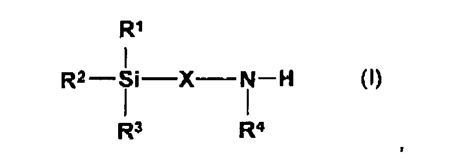 in welcher
R1, R2 und R3 jeweils Alkylreste mit bis zu 6 Kohlenstoffatomen und/oder Alkoxyreste, die bis zu 3 Sauerstoffatome enthalten, bedeuten, mit der Maßgabe, daß mindestens einer der Reste R1, R2 und R3 für einen solchen Alkoxyrest steht,
X für einen linearen oder verzweigten Alkylenrest mit 3 oder 4 Kohlenstoffatomen steht, und
R⁴ für Wasserstoff, einen Methylrest oder einen Rest der Formel 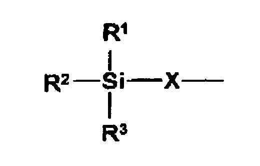 steht, in welchem R¹, R², R³ und X die vorstehend angegebene Bedeutung haben,
zum Einsatz kommen.

2. Verfahren gemäß Anspruch 1, **dadurch gekennzeichnet, daß** als Komponente A) Reaktionsprodukte von Aminosilanen mit Ethylencarbonat, Propylencarbonat, β-Propiolacton, γ-Butyrolacton, γ-Valerolacton, γ-Caprolacton und/oder ε-Caprolacton zum Einsatz kommen.

3. Verfahren gemäß einem der Ansprüche 1 oder 2, **dadurch gekennzeichnet, daß** als hydroxyfunktionelle Komponente B) mehrwertige Alkohole des Molekulargewichtsbereiches 62 bis 400 g/mol mit 2 bis 14 Kohlenstoffatomen und/oder Ester- und/oder Etheralkohole des Molekulargewichtsbereiches 106 bis 400 zum Einsatz kommen.

4. Verfahren gemäß einem der Ansprüche 1 bis 3, **dadurch gekennzeichnet, daß** als hydroxyfunktionelle Komponente B) Diole und/oder Triole mit 2 bis 6 Kohlenstoffatomen zum Einsatz kommen.

5. Verfahren gemäß einem der Ansprüche 1 bis 4, **dadurch gekennzeichnet, daß** die hydroxyfunktionellen Komponenten B) in Summe in einer Menge von 1 bis 70 Gew.-%, bezogen auf die Gesamtmenge an eingesetztem Hydroxyurethan und/oder Hydroxyamid A) zum Einsatz kommen.

6. Verfahren gemäß einem der Ansprüche 1 bis 5, **dadurch gekennzeichnet, daß** als Komponente C) Diisocyanate mit aliphatisch und/oder cycloaliphatisch gebundenen Isocyanatgruppen zum Einsatz kommen.

7. Verfahren gemäß einem der Ansprüche 1 bis 6, **dadurch gekennzeichnet, daß** als Komponente C) 1,6-Diisocyanatohexan, 1-Isocyanato-3,3,5-trimethyl-5-isocyanatomethyl-cyclohexan, 2,4'- und/oder 4,4'-Diisocyanatodicyclohexylmethan oder beliebige Gemische dieser Diisocyanate zum Einsatz kommen.

8. Verfahren gemäß einem der Ansprüche 1 bis 7, **dadurch gekennzeichnet, daß** man die Umsetzung in Gegenwart eines die Bildung von Allophanatgruppen beschleunigenden Katalysators durchführt, bei dem es sich um Zink- und/oder Zirconiumverbindungen handelt.

9. Allophanatgruppen enthaltende Polyisocyanate erhältlich nach einem Verfahren gemäß einem der Ansprüche 1 bis 8.

10. Allophanatgruppen enthaltenden Polyisocyanate gemäß Anspruch 9, **dadurch gekennzeichnet, dass** sie mit Blockierungsmitteln blockiert sind.

11. Verwendung der Allophanatgruppen enthaltenden Polyisocyanate gemäß Anspruch 9 als Ausgangskomponente bei der Herstellung von Polyurethankunststoffen.

12. Beschichtungsmittel enthaltend Allophanatgruppen tragende Polyisocyanate gemäß Anspruch 9, sowie mit diesen Beschichtungsmitteln beschichtete Substrate.

## Claims

1. Process for preparing polyisocyanates containing allophanate groups by reacting
A) at least one hydroxyamide and/or hydroxyurethane containing silane groups and obtainable from the reaction of aminosilanes with cyclic carbonates and/or lactones, respectively
and
B) at least one further polyhydric hydroxy-functional component from the molecular weight range 62 to 2000 g/mol with an amount, representing a molar excess relative to the NCO-reactive groups of components A) and B), of
C) at least one diisocyanate having aliphatically, cycloaliphatically, araliphatically and/or aromatically attached isocyanate groups
and optionally subsequently removing the unreacted diisocyanate excess,
aminosilanes employed being those of the general formula (I) 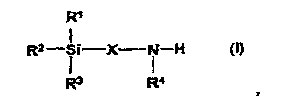 in which
R¹, R² and R³ are each alkyl radicals having up to 6 carbon atoms and/or alkoxy radicals containing up to 3 oxygen atoms, with the proviso that at least one of the radicals R¹, R² and R³ is such an alkoxy radical,
X is a linear or branched alkylene radical having 3 or 4 carbon atoms, and
R⁴ is hydrogen, a methyl radical or a radical of the formula 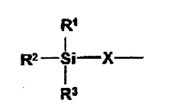 in which R¹, R², R³ and X have the definition indicated above.

2. Process according to Claim 1, **characterized in that** as component A) use is made of reaction products of aminosilanes with ethylene carbonate, propylene carbonate, β-propiolactone, γ-butyrolactone, γ-valerolactone, γ-caprolactone and/or ε-caprolactone.

3. Process according to either of Claims 1 and 2, **characterized in that** use is made as hydroxy-functional component B) of polyhydric alcohols from the molecular weight range 62 to 400 g/mol having 2 to 14 carbon atoms and/or of ester alcohols and/or ether alcohols from the molecular weight range 106 to 400.

4. Process according to any of Claims 1 to 3, **characterized in that** use is made as hydroxy-functional component B) of diols and/or triols having 2 to 6 carbon atoms.

5. Process according to any of Claims 1 to 4, **characterized in that** the hydroxy-functional components B) are employed in total in an amount of 1% to 70% by weight, based on the total amount of hydroxyamide and/or hydroxyurethane A) employed.

6. Process according to any of Claims 1 to 5, **characterized in that** use is made as component C) of diisocyanates having aliphatically and/or cycloaliphatically attached isocyanate groups.

7. Process according to any of Claims 1 to 6, **characterized in that** use is made as component C) of 1,6-diisocyanatohexane, 1-isocyanato-3,3,5-trimethyl-5-isocyanatomethylcyclohexane, 2,4'-and/or 4,4'-diisocyanatodicyclohexylmethane or any desired mixtures of these diisocyanates.

8. Process according to any of Claims 1 to 7, **characterized in that** the reaction is carried out in the presence of a catalyst which accelerates the formation of allophanate groups and which comprises zinc compounds and/or zirconium compounds.

9. Polyisocyanates containing allophanate groups, obtainable by a process according to any of Claims 1 to 8.

10. Polyisocyanates containing allophanate groups according to Claim 9, **characterized in that** they are blocked with blocking agents.

11. Use of the polyisocyanates containing allophanate groups according to Claim 9 as a starting component in the production of polyurethane plastics.

12. Coating compositions comprising polyisocyanates carrying allophanate groups according to Claim 9, and also substrates coated with these coating compositions.

## Revendications

1. Procédé de fabrication de polyisocyanates contenant des groupes allophanate par mise en réaction de
A) au moins un hydroxyuréthane et/ou hydroxyamide comprenant des groupes silane, pouvant être obtenu par la réaction d'aminosilanes avec des carbonates ou des lactones cycliques
et
B) au moins un autre composant polyvalent à fonction hydroxy de la plage de poids moléculaire allant de 62 à 2 000 g/mol
avec une quantité molaire en excès par rapport aux groupes réactifs avec NCO des composants A) et B) de C) au moins un diisocyanate contenant des groupes isocyanate reliés de manière aliphatique, cycloaliphatique, araliphatique et/ou aromatique et éventuellement élimination ultérieure de l'excès de diisocyanate non réagi,
dans lequel des aminosilanes de formule générale (I) 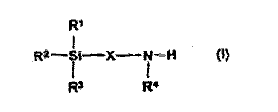 dans laquelle
R1, R2 et R3 signifie chacun des radicaux alkyle contenant jusqu'à 6 atomes de carbone et/ou des radicaux alcoxy contenant jusqu'à 3 atomes d'oxygène, à condition qu'au moins un des radicaux R1, R2 et R3 représente un tel radical alcoxy,
X représente un radical alkylène linéaire ou ramifié contenant 3 ou 4 atomes de carbone, et
R⁴ représente l'hydrogène, un radical méthyle ou un radical de formule 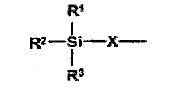 dans laquelle R¹, R², R³ et X ont la signification donnée précédemment,
sont utilisés en tant qu'aminosilanes.

2. Procédé selon la revendication 1, **caractérisé en ce que** des produits de réaction d'aminosilanes avec le carbonate d'éthylène, le carbonate de propylène, la β-propiolactone, la γ-butyrolactone, la γ-valérolactone, la γ-caprolactone et/ou l'ε-caprolactone sont utilisés en tant que composant A).

3. Procédé selon l'une quelconque des revendications 1 ou 2, **caractérisé en ce que** des alcools polyvalents de la plage de poids moléculaire allant de 62 à 400 g/mol contenant 2 à 14 atomes de carbone et/ou des ester- et/ou éther-alcools de la plage de poids moléculaire allant de 106 à 400 sont utilisés en tant que composant à fonction hydroxy B).

4. Procédé selon l'une quelconque des revendications 1 à 3, **caractérisé en ce que** des diols et/ou des triols contenant 2 à 6 atomes de carbone sont utilisés en tant que composant à fonction hydroxy B).

5. Procédé selon l'une quelconque des revendications 1 à 4, **caractérisé en ce que** le composant à fonction hydroxy B) est utilisé au total en
une quantité de 1 à 70 % en poids, par rapport à la quantité totale d'hydroxyuréthane et/ou d'hydroxyamide A) utilisé.

6. Procédé selon l'une quelconque des revendications 1 à 5, **caractérisé en ce que** des diisocyanates contenant des groupes isocyanate reliés de manière aliphatique et/ou cycloaliphatique sont utilisés en tant que composant C).

7. Procédé selon l'une quelconque des revendications 1 à 6, **caractérisé en ce que** le 1,6-diisocyanatohexane, le 1-isocyanato-3,3,5-triméthyl-5-isocyanatométhyl-cyclohexane, le 2,4'- et/ou 4,4'-diisocyanatodicyclohexylméthane ou des mélanges quelconques de ces diisocyanates sont utilisés en tant que composant C).

8. Procédé selon l'une quelconque des revendications 1 à 7, **caractérisé en ce que** la réaction est réalisée en présence d'un catalyseur accélérant la formation de groupes allophanate, celui-ci consistant en des composés de zinc et/ou de zirconium.

9. Polyisocyanates contenant des groupes allophanate pouvant être obtenus par un procédé selon l'une quelconque des revendications 1 à 8.

10. Polyisocyanates contenant des groupes allophanate selon la revendication 9, **caractérisés en ce qu'**ils sont bloqués avec des agents de blocage.

11. Utilisation de polyisocyanates contenant des groupes allophanate selon la revendication 9 en tant que composant de départ pour la fabrication de plastiques de polyuréthane.

12. Agents de revêtement contenant des polyisocyanates portant des groupes allophanate selon la revendication 9, ainsi que substrats revêtus avec ces agents de revêtement.
